# FASCICULE DE BREVET EUROPEEN

(11) **EP 2 016 586 B1**
(45) Date de publication et mention de la délivrance du brevet: **24.10.2012**
(21) Numéro de dépôt: 07765999.3
(22) Date de dépôt: 04.05.2007
(51) Int. Cl.: G11B 7/246, G11B 7/245

(54) **MÉMOIRES OPTIQUES, PROCÉDÉ DE LECTURE ET D'ÉCRITURE DE TELLES MÉMOIRES OPTIQUES, ET DISPOSITIF POUR LA LECTURE ET L'ÉCRITURE DE TELLES MÉMOIRES**
OPTISCHE SPEICHER, VERFAHREN ZUM AUSLESEN UND BESCHREIBEN SOLCHER OPTISCHEN SPEICHER UND VORRICHTUNG ZUM AUSLESEN UND BESCHREIBEN SOLCHER SPEICHER
OPTICAL MEMORIES, METHOD FOR READING AND WRITING SUCH OPTICAL MEMORIES, AND DEVICE FOR READING AND WRITING SUCH MEMORIES

(30) Priorité: 05.05.2006 FR 0651627
(43) Date de publication de la demande: 21.01.2009
(73) Titulaire: Centre National de la Recherche Scientifique - CNRS, 75794 Paris Cedex 16 (FR); Universite Louis Pasteur Industrie, 67000 Strasbourg (FR)
(72) Inventeur: FORT, Alain, 67000 Strasbourg (FR); DORKENOO, Kokou, 67000 Strasbourg (FR); GINDRE, Denis, 67200 Strasbourg (FR); BARSELLA, Alberto, 67000 Strasbourg (FR)
(74) Mandataire: Novagraaf Technologies
(86) Numéro de dépôt international: PCT/FR2007/051219
(87) Numéro de publication internationale: WO 2007/128938

(56) Documents cités:
- EP-A1- 0 397 545
- EP-A2- 0 295 145
- US-A1- 2005 136 357
- "Reversible optical storage utilizing pulsed, photoinduced, electric-field-assisted reorientation of azobenzenes" APPLIED PHYSICS LETTERS, AIP, AMERICAN INSTITUTE OF PHYSICS, MELVILLE, NY, US, vol. 66, no. 17, 24 avril 1995 (1995-04-24), pages 2156-2158, XP012012608 ISSN: 0003-6951
- A. PETRI, S. KUMMER, H. ANNESER, F. FEINER, C. BRÄUCHLE: "Photoinduced reorientation of Cholesteric Liquid Crystalline Polysiloxanes and Applications in Optical Information Storage and SHG" BER. BUNSENGES. PHYS. CHEM., vol. 97, 1993, page 1281-1286, XP002412002

## Description

La présente invention se rapporte au domaine technique des mémoires optiques.

La présente invention se rapporte plus particulièrement à une mémoire optique de données, ladite mémoire comprenant au moins une couche d'un matériau support, ledit matériau support comprenant des molécules ayant, dans une zone locale, un état collectif de molécules parmi au moins un premier état collectif de molécules, et un deuxième état collectif de molécules.

L'art antérieur connait notamment l'article de R. A. Hill and all, « Reversible optical storage utilizing pulsed, photoinduced, electric-field-assisted reorientation of azobenzenes », Appl. Phys. Lett. 66(17), 24 Avril 1995, qui décrit une mémoire optique comprenant une couche de polymethylmethacrylate avec des chaînes latérales d'un dérivé azobenzènique. Un procédé d'écriture comprend une orientation des chaînes latérales par le biais d'un champ électrique et l'application d'un chauffage, puis une application sélective d'un rayonnement pulsé de 532nm afin de détruire localement l'ordre. La lecture s'effectue par une détection d'un signal de seconde harmonique.

On connait aussi EP-A2-0295145, qui décrit une mémoire optique comprenant une matrice de polymère et un colorant dopant. Un procédé d'écriture comprend une orientation des chaines latérales par le biais à la fois de l'application d'un champ électrique et d'un chauffage. Et ce procédé comprend une application sélective d'un rayonnement laser afin de détruire localement l'ordre. La lecture s'effectue par une détection d'un signal de seconde harmonique.

De telles mémoires sont aussi connues de la demande PCT WO 99/23650, qui décrit un disque optique comprenant des photochromes insérés dans une matrice. Les photochromes possèdent deux états physico-chimiques. De façon connue en soi, ces deux états physico-chimiques correspondent à une forme ouverte de la molécule, et à une forme fermée de la molécule. La modification de l'état physico-chimique des photochromes est réalisée par un rayonnement laser fortement focalisé par absorption à deux photons. Par ce rayonnement, la structure fermée des molécules est modifiée de sorte à produire des molécules ouvertes localement. Il est connu en soi que l'effet d'absorption à deux photons est un phénomène quadratique en fonction de l'intensité, très localisé, qui permet donc de modifier l'état des molécules avec une forte résolution. L'absorption à deux photons permet donc de réaliser une écriture dans la matrice formant le disque.

Le document précité enseigne également que les deux états physico-chimiques des photochromes ont des bandes d'absorption éloignées dans le visible, typiquement 450 nm pour le premier état, et 530 nm pour le deuxième état. Cette différence dans les propriétés d'absorption permet donc de réaliser la lecture du disque. Pour ce faire, on envoie un rayonnement électromagnétique sur le disque et on détecte les spectres absorbés et une émission de fluorescence. Le rayonnement électromagnétique de lecture est également focalisé de façon précise sur la couche à lire et sur la zone de lecture de la couche. Ceci est réalisé par exemple par une excitation de fluorescence à deux photons des molécules de photochromes.

Ainsi, une première caractéristique d'absorption correspondra à un bit « 1 », et une deuxième caractéristique d'absorption correspondra à un bit « 0 ». Le disque optique tel que décrit dans le document précité permet donc le stockage de données.

Toutefois, le disque optique décrit dans le document précité possède l'inconvénient que les deux états des photochromes possèdent des stabilités différentes. Ainsi, on ne peut garantir que les photochromes d'un état donné ont été volontairement mis dans cet état, ou sont revenu à cet état par instabilité de l'état antagoniste. Ceci crée donc des erreurs dans l'écriture du disque et en conséquence des erreurs dans sa lecture.

La sélectivité spatiale dans une direction perpendiculaire à la surface du disque est obtenue par insertion de couches intermédiaires inactives de 30 microns d'épaisseurs séparant les couches actives de 1 micron d'épaisseur, limitant ainsi la densité de stockage d'information.

L'invention vise à pallier les inconvénients de l'art antérieur.

L'invention a notamment pour but de pouvoir écrire et lire une mémoire optique avec une grande sélectivité spatiale.

Un autre but de l'invention est de fournir un procédé d'écriture et de lecture dans une mémoire optique pour lequel la sélectivité spatiale à l'écriture soit sensiblement égale à la sélectivité spatiale à la lecture.

L'invention concerne un procédé de lecture selon la revendication 10.

De façon connue en soi, le phénomène de génération de second harmonique est un effet quadratique en fonction de l'intensité du rayonnement électromagnétique. Grâce à cet effet quadratique, on peut donc détecter la génération de second harmonique avec une très bonne résolution spatiale, puisque les effets de molécules situées hors de la zone de focalisation seront négligeables par rapport aux effets des molécules de la zone de focalisation. Le signal de second harmonique est donc un rayonnement de longueur d'onde différente de la longueur d'onde du rayonnement incident de lecture. La détection de cette longueur d'onde et de son intensité permet de déterminer si la molécule est dans un état générant un signal de second harmonique d'intensité correspondant à un symbole binaire prédéfini.

Notamment, on peut prévoir qu'une simple détection positive ou négative du signal est effectuée, permettant ainsi de déterminer si la molécule est dans un état générant un signal de second harmonique correspondant par exemple à un bit « 1 », ou un état ne générant pas de signal de second harmonique correspondant par exemple à un bit « 0 ».

Ainsi, dans le procédé de lecture susmentionné, ladite étape de génération d'un signal de lecture représentatif de ladite détection comprend des sous-étapes consistant à :
- générer une première valeur dudit signal de lecture en cas détection positive dudit signal de second harmonique ;
- générer une deuxième valeur dudit signal de lecture en cas détection négative dudit signal de second harmonique.

L'invention concerne également un procédé d'écriture dans une mémoire de données selon la revendication 1.

Éventuellement, seules des molécules ayant ledit premier état collectif de molécules sont aptes à générer un signal de second harmonique lorsqu'elles sont excitées par un rayonnement électromagnétique de lecture dans ladite zone d'écriture.

Selon le procédé d'écriture de l'invention, on met donc l'ensemble des molécules dans le premier état de molécule, par exemple l'état correspondant à un bit « 1 » ou un symbole binaire composé de plusieurs "1" par application d'un champ électrique d'orientation. L'état de ces molécules est ensuite stabilisé en fixant les molécules dans cet état. Les bits « 0 » ou autres symboles binaires sont ensuite sélectivement écrits par application d'un rayonnement électromagnétique d'écriture. La puissance et/ou le temps d'exposition du rayonnement électromagnétique peut être modulé lorsque plus de deux états sont nécessaires pour encoder les symboles binaires. Ces différents bits peuvent ensuite être lus par le procédé de lecture tel que précédemment décrit puisque seules les molécules ayant ledit premier état de molécule sont aptes à générer un signal de second harmonique.

Comme précédemment, lesdites molécules peuvent être des molécules à transfert de charge orientables, et ledit premier état collectif de molécules peut être une orientation privilégiée collective desdites molécules dans ledit matériau support, et ledit deuxième état de molécule peut être une orientation aléatoire collective desdites molécules, et dans lequel ledit champ électrique d'orientation est apte à orienter lesdites molécules selon ladite orientation privilégiée collective. Dans ce cas, ledit champ électrique d'orientation est apte à orienter lesdites molécules selon ladite orientation privilégiée collective.

Afin de permettre une bonne sélectivité spatiale des zones d'écritures, ledit rayonnement électromagnétique d'écriture est apte à générer une absorption à deux photons au niveau de ladite au moins une zone d'écriture, ladite absorption à deux photons étant apte à faire passer lesdites molécules dudit premier état audit second état dans ladite au moins une zone d'écriture.

De façon connue en soi, l'effet d'absorption à deux photons permet d'obtenir une très bonne sélectivité spatiale de l'absorption, notamment parce que cet effet est un effet quadratique en fonction de l'intensité du rayonnement électromagnétique d'écriture. Par ailleurs, cet effet étant quadratique comme l'effet de génération de second harmonique, la résolution spatiale en écriture est de l'ordre de la résolution spatiale en lecture. Ceci permet donc d'obtenir une mémoire sur laquelle on peut lire des données de façon efficace et cohérente avec l'information inscrite.

Selon un mode de réalisation, afin de stabiliser les molécules dans le premier état collectif de molécules, ladite étape de fixation desdites molécules dans ledit premier état collectif de molécules peut comprendre une étape de polymérisation dudit matériau support.

De la sorte, le matériau est rigidifié, et les molécules incorporées dans le matériau sont fixées dans leur premier état de molécule. Ceci assure une stabilité de cet état permettant d'obtenir une cohérence dans l'écriture des données.

Afin d'écrire dans la mémoire optique, des données prédéterminées, dans le procédé d'écriture susmentionné, ladite étape d'application sélective d'un rayonnement électromagnétique d'écriture peut comprendre des sous-étapes de :
- réception d'un signal binaire d'écriture ;
- application dudit rayonnement électromagnétique d'écriture au niveau d'au moins une zone d'écriture en fonction dudit signal binaire d'écriture.

De la sorte, les zones d'orientation privilégiée et d'orientation aléatoire correspondent aux données binaires à écrire.

En particulier, le procédé susmentionné peut comprendre des étapes consistant à :
- recevoir un signal binaire d'écriture ayant une première valeur de signal d'écriture ou une deuxième valeur de signal d'écriture ;
- appliquer ledit rayonnement électromagnétique d'écriture uniquement lorsque ledit signal d'écriture a ladite première valeur de signal d'écriture.

Par ailleurs, il est possible de réinscrire des données après effacement. Dans ce cas, le procédé d'écriture susmentionné peut comprendre une étape préalable consistant à :
- chauffer ladite mémoire de sorte à mettre lesdites molécules dans ledit second état de molécules.

Dans ce cas, les molécules revenues à leur état d'orientation aléatoire par l'étape de chauffage peuvent être réorientées globalement puis désorientées sélectivement comme précédemment.

L'invention concerne également un système de lecture/écriture d'une mémoire optique de données selon la revendication 18.

Elle concerne également un dispositif d'écriture selon la revendication 12.

Éventuellement, seules des molécules ayant ledit premier état collectif de molécules étant aptes à générer un signal de second harmonique lorsqu'elles sont excitées par un rayonnement électromagnétique de lecture dans ladite zone d'écriture.

Dans un mode de réalisation du dispositif d'écriture susmentionné, lesdites molécules peuvent être des molécules à transfert de charge orientables, et ledit premier état collectif de molécules peut être une orientation privilégiée collective desdites molécules dans ledit matériau support, et ledit deuxième état collectif de molécules peut être une orientation aléatoire collective desdites molécules dans ladite zone d'écriture, et ledit champ électrique d'orientation peut être apte à orienter lesdites molécules selon ladite orientation privilégiée collective.

Dans un mode de réalisation du dispositif de lecture susmentionné, ledit rayonnement électromagnétique d'écriture peut être apte à générer une absorption à deux photons au niveau de ladite au moins une zone d'écriture, ladite absorption à deux photons pouvant faire passer lesdites molécules dudit premier état collectif de molécule audit second état collectif de molécules dans ladite au moins une zone d'écriture.

Selon un mode de réalisation du dispositif de lecture, lesdits moyens de fixation peuvent comprendre des moyens de polymérisation apte à polymériser ledit matériau support.

On décrit maintenant un mode de réalisation particulier de l'invention en référence aux figures annexées dans lesquelles :
- FIG. 1 est une illustration du phénomène de génération de second harmonique due à l'orientation de molécules traversées par un faisceau lumineux ;
- FIG. 2 est une illustration de la sélectivité spatiale du phénomène d'absorption à deux photons dans un matériau ;
- FIG. 3A, 3B et 3C représentent la forme des volumes élémentaires des zones ou voxels, selon l'invention pour une première ouverture numérique de 0,3 d'un faisceau laser d'écriture ;
- FIG. 4A, 4B et 4C représentent la forme des volumes élémentaires des zones ou voxels, selon l'invention pour une deuxième ouverture numérique de 0,6 d'un faisceau laser d'écriture ;
- FIG. 5 représente une étape d'un procédé d'écriture selon l'invention dans laquelle on oriente les molécules selon une orientation privilégiée dans une mémoire selon l'invention ;
- FIG. 6 représente la désorientation des molécules obtenue par une étape d'écriture selon l'invention ;
- FIG. 7 représente trois couches d'une mémoire comprenant des molécules orientées globalement et désorientées localement selon l'invention ;
- FIG. 8 représente une illustration de l'effet de désorientation utilisée pour écrire dans une mémoire selon l'invention ;
- FIG. 9 représente l'ensemble des étapes d'écriture par orientation et désorientation des molécules selon l'invention ;
- FIG. 10 à 13 représentent des étapes de lecture d'une mémoire à trois couches selon l'invention, ainsi que la représentation binaire obtenue.

Dans les figures ci-dessus, des références identiques se rapportent à des éléments techniques similaires. En particulier, les molécules utilisées dans le cadre de la présente invention seront désignées de façon générale par la référence 1. Elles seront désignées par la référence 2 lorsqu'elles ont une orientation locale aléatoire, et par la référence 4 lorsqu'elles ont une orientation locale collective privilégiée.

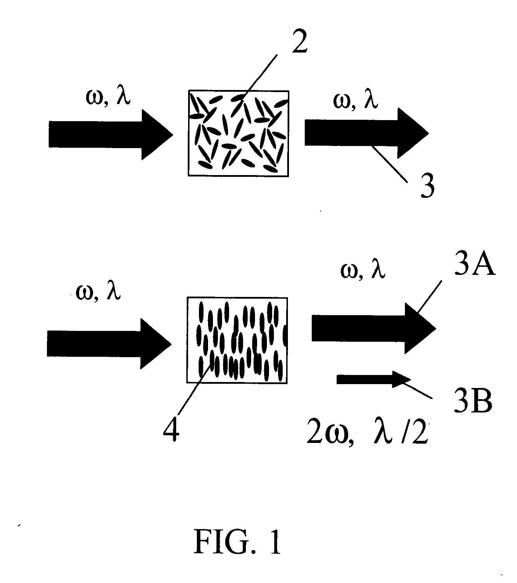

La FIG. 1 illustre le phénomène de génération de second harmonique due à l'orientation collective de molécules dans un volume.

Illustré dans la partie supérieure de la FIG. 1, lorsque des molécules orientées aléatoirement 2 dans un volume reçoivent un faisceau lumineux de longueur d'onde λ, le faisceau transmis par ce volume ne modifie pas la longueur d'onde du faisceau incident. Le faisceau transmis 3 a donc également une longueur d'onde λ.

Illustré maintenant dans la partie inférieure de la FIG. 1, lorsque des molécules ayant une orientation collective privilégiée selon une direction privilégiée 4 reçoivent un faisceau lumineux de longueur d'onde λ, un premier faisceau 3A à une longueur d'onde λ est transmis, ainsi qu'un second faisceau 3B de longueur d'onde moitié λ/2. L'apparition de ce faisceau de longueur d'onde moitié est caractéristique d'une génération de second harmonique par les molécules orientées collectivement de façon privilégiée.

De façon connue en soi, des molécules orientées aléatoirement 2 dans un volume local ne permettent pas la génération de ce second harmonique.

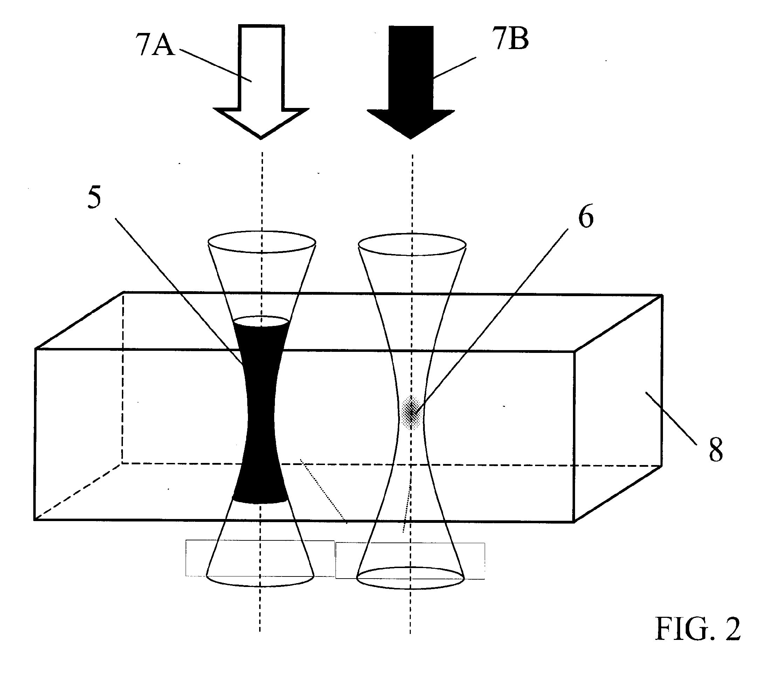

Illustré maintenant FIG. 2, on décrit le phénomène d'absorption à deux photons dans le cadre de la présente invention. Lorsque que l'on excite un milieu 8 avec un faisceau laser 7A correspondant à une longueur d'onde d'absorption des molécules du milieu 8, l'excitation par absorption à un photon est localisée sur une zone étendue 5, car le phénomène d'absorption à un photon est un phénomène linéaire.

Au contraire, par excitation du milieu 8 avec un faisceau laser 7B de longueur d'onde adapté pour l'absorption à deux photons, l'excitation par absorption à un photon est localisée sur une zone peu étendue 6, car le phénomène d'absorption à deux photons est un phénomène quadratique.

Ainsi, il est possible d'obtenir une très bonne localisation de la zone d'excitation d'un milieu, par absorption à deux photons des molécules du milieu.

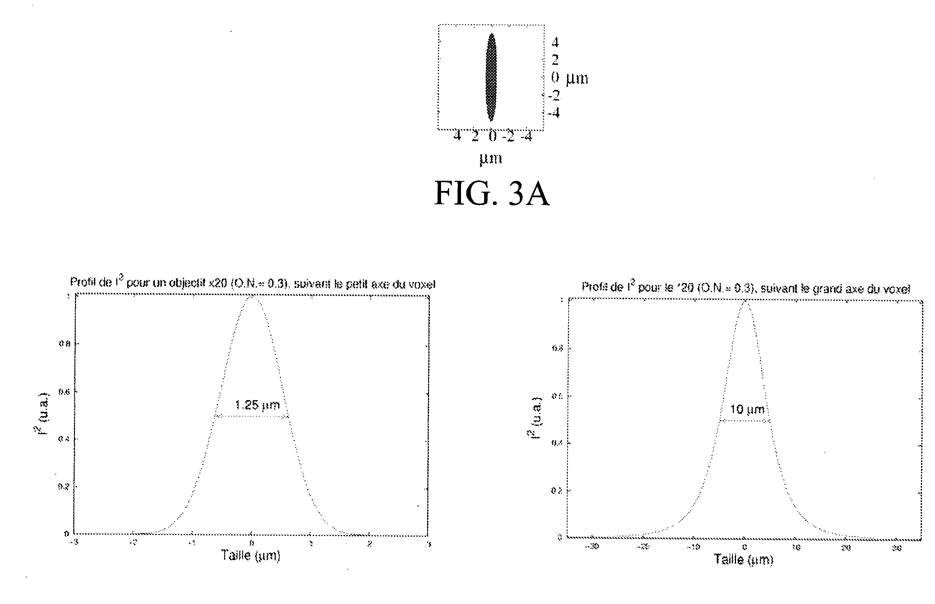

Illustré FIG. 3A, 3B, et 3C, pour une absorption à deux photons de molécules fluorescentes excitées par un laser, on a représenté les dimensions de la zone d'émission de fluorescence sous la forme d'un voxel pour un objectif d'ouverture numérique de 0,3.

Selon la FIG. 3A, on observe une forme oblongue du voxel correspondant à la zone d'émission.

Sur la FIG. 3B, on observe que le profil de l'intensité d'émission a une longueur caractéristique de 1,25 micromètres selon le petit axe du voxel dans un plan perpendiculaire au faisceau d'excitation.

Sur la FIG. 3C, on observe que le profil de l'intensité d'émission a une longueur caractéristique d'environ 10 micromètres selon le grand axe du voxel dans la direction du faisceau d'excitation.

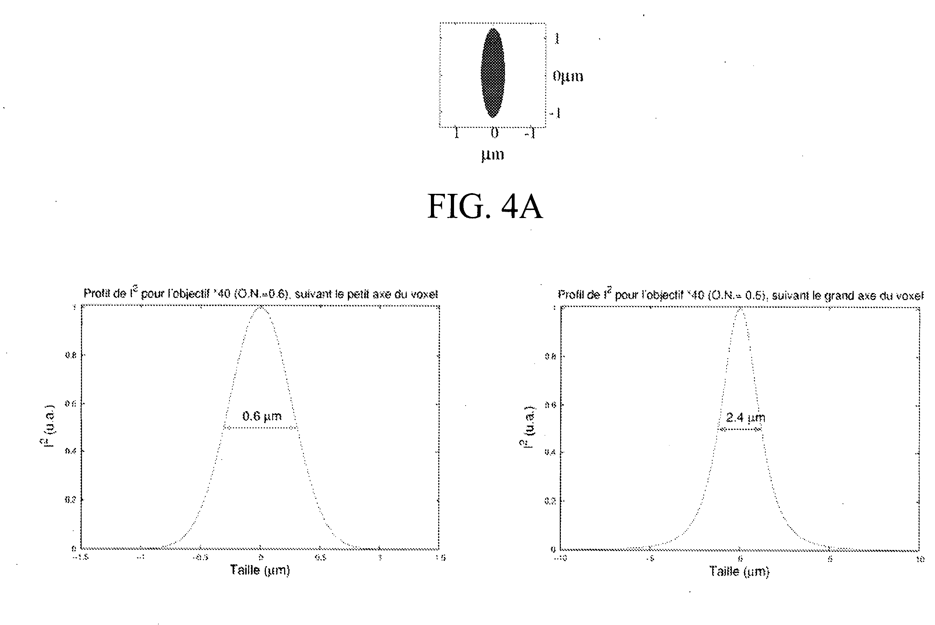

Les FIG. 4A, 4B et 4C illustrent les mêmes données pour un objectif d'ouverture numérique 0.6.

Cette fois, sur la FIG. 4B, on observe que le profil de l'intensité d'émission a une longueur caractéristique de 0,6 micromètres selon le petit axe du voxel dans un plan perpendiculaire au faisceau d'excitation.

Sur la FIG. 4C, on observe que le profil de l'intensité d'émission a une longueur caractéristique d'environ 2,4 micromètres selon le grand axe du voxel dans la direction du faisceau d'excitation.

Cette propriété de l'absorption à deux photons est connue en soi et est décrite de façon détaillée dans l'ouvrage de Y.R. Shen « The principles of Nonlinear Optics », Wiley, New-York 1984.

La présente invention met en oeuvre de façon avantageuse le fait que les deux phénomènes physiques d'absorption à deux photons et de génération de second harmonique sont des phénomènes quadratiques, ce qui permet une bonne résolution spatiale de ces phénomènes.

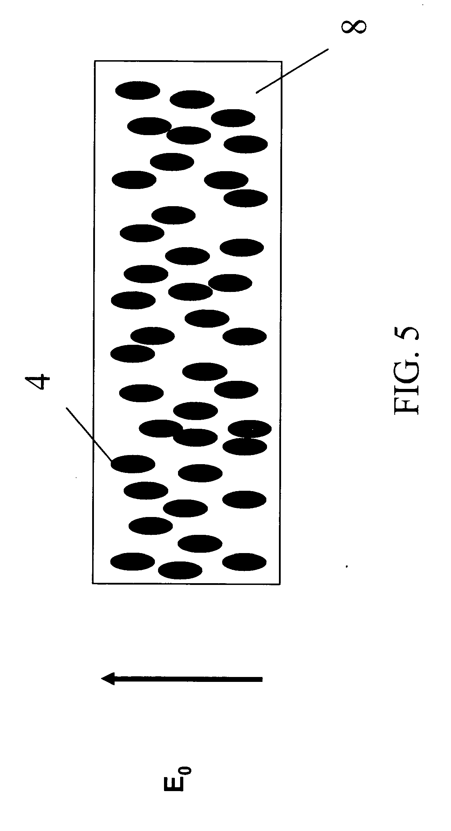

La FIG. 5 illustre un procédé d'orientation collective dans une direction privilégiée de molécules 4 dans le cadre de la présente invention.

Selon l'invention, on oriente collectivement selon une direction privilégiée, des molécules 4 dans une matrice 8.

La matrice 8 est une matrice polymère ou un matériau hybride organique/inorganique, par exemple de type sol-gel. La matrice 8 est réticulable ou polymérisable, et fonctionnalisée par des molécules à transfert de charge dites push-pull en langue anglaise possédant un moment dipolaire permanent et une forte hyperpolarisabilité quadratique. Les molécules à transfert de charge sont par exemple des chromophores à transfert de charge de type D-π-A. Ces chromophores à transfert de charge possèdent un fort moment dipolaire permanent et peuvent donc être orientés sous un champ électrique. Ces molécules peuvent également être fonctionnalisées avec des groupements acrylate permettant de greffer le chromophore à transfert de charge à la matrice de polymère et ainsi assurer une meilleure stabilité de l'orientation figée par photoréticulation ou photopolymérisation. Le polymère utilisé est de préférence à haute température de transition vitreuse T_{g}, c'est-à-dire supérieure à la température ambiante.

Sous l'effet d'un champ électrique E₀ ayant lui-même une direction d'orientation, les molécules 4 s'orientent dans une direction privilégiée dans la matrice 8. Le champ électrique E₀ est appliqué à l'aide d'électrodes ou par effet Corona, et a une intensité de quelques kilovolts par millimètres.

Selon une variante, l'orientation des molécules à transfert de charge peut également être réalisé par un procédé optique.

Une fois les molécules 4 orientées dans une direction privilégiée, on rigidifie la matrice 8 soit par voie thermique, soit par voie optique, par exemple par photopolymérisation. Cette rigidification du matériau a pour effet de fixer de façon permanente l'orientation des molécules à transfert de charge 4 dans une direction privilégiée dans le matériau 8.

Ainsi rigidifié, le matériau 8 peut avoir une concentration élevée en chromophore à transfert de charge, typiquement 40% par dopage, greffage ou incorporation dans les chaînes monomères. Le coefficient électro-optique du matériau ainsi concentré en chromophores est non négligeable, typiquement de 100 pm/V.

Selon l'invention, à ce stade du procédé d'écriture, toutes les molécules du matériau 8 sont orientées selon cette orientation privilégiée. Si la mémoire optique comprend une pluralité de couches, les molécules de toutes les couches sont orientées selon cette orientation privilégiée.

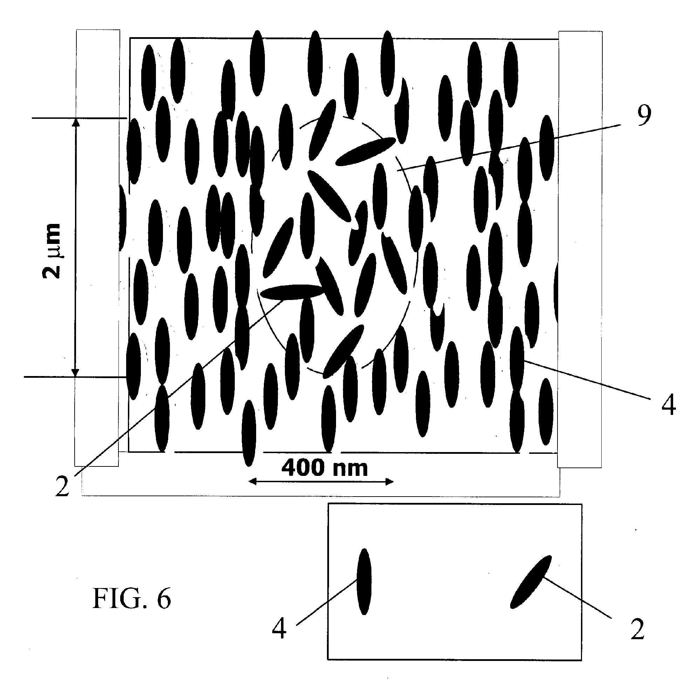

La FIG. 6 représente un état local 9 modifié des molécules selon un procédé d'écriture de l'invention. Selon l'invention, on écrit des bits « 0 » dans un matériau 8 tel que précédemment décrit dans lequel les molécules ont été préalablement toutes orientées selon une direction privilégiée et représentent des bits « 1 ». Cette inscription est réalisée à l'aide d'un faisceau laser focalisé dans un micro-volume 9. Le laser utilisé est par exemple un laser pulsé femtoseconde apte à générer une absorption à deux photons dans des volumes de taille microscopiques.

Le faisceau laser est focalisé dans le micro-volume 9 de sorte à générer une absorption à deux photons tel que précédemment décrit. De la sorte, le micro-volume 9 est très localisé, et peut avoir des dimensions comme décrites en références aux FIG. 3A à 3C ou 4A à 4C, typiquement inférieures au micron cube.

Par l'effet du faisceau laser focalisé, et par absorption à deux photons, des molécules orientées 4 sont désorientées en des molécules à orientation aléatoire 2 dans le micro-volume 9.

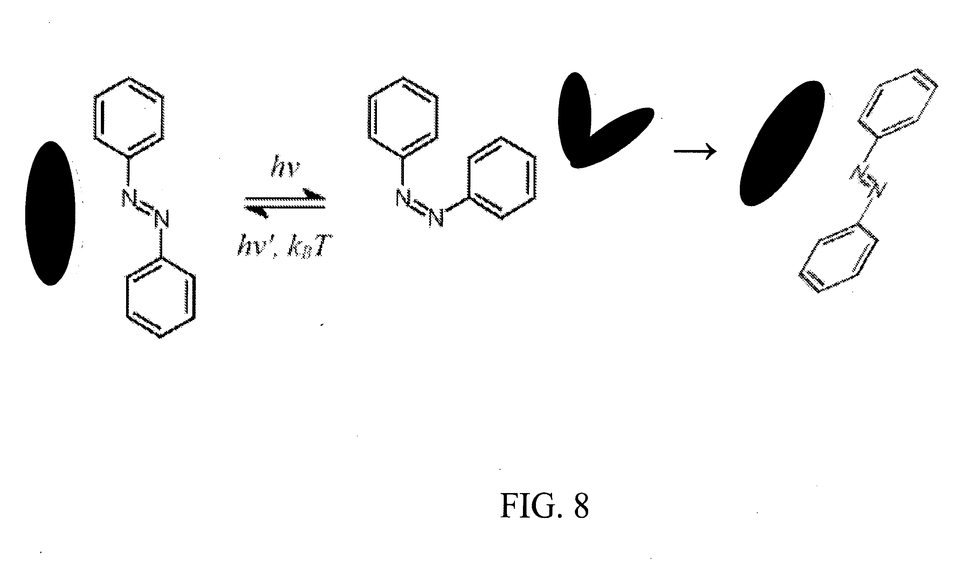

L'effet de désorientation des molécules orientées 4 en des molécules d'orientation aléatoires 2 dans un micro-volume 9 est par exemple une conséquence d'un effet cis-trans illustré FIG. 8 pour des photochromes de type azobenzène. Cette désorientation peut être réalisée par effet photothermique. Cet effet d'isomérisation cis-trans pour des molécules de type azobenzène est décrit en détail dans l'ouvrage de H. Rau « Photochemistry and Photophysics », Vol. 2, J. Rebek, CRC Press, Boca Raton, FL, 1990.

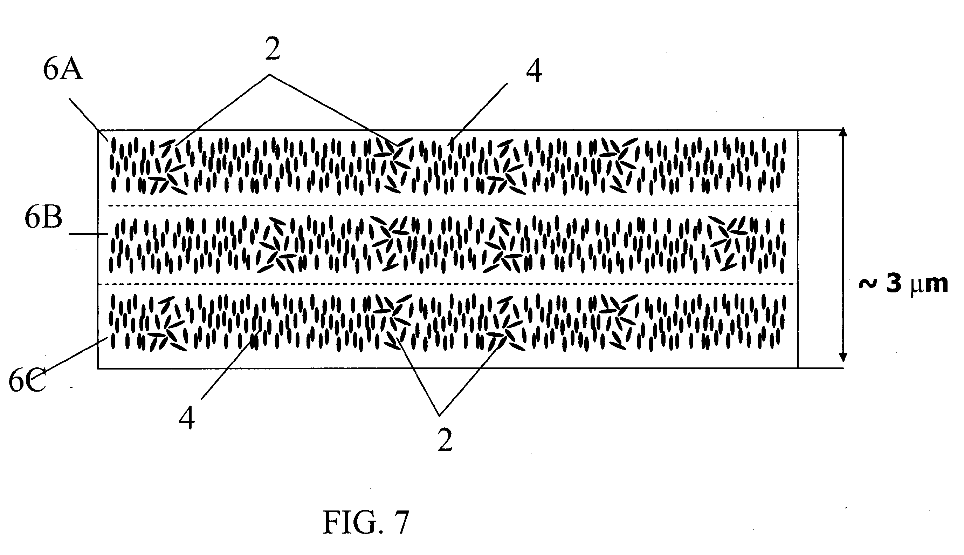

Illustré maintenant FIG. 7, on a représenté trois couches 6A, 6B, 6C d'un matériau 8 comprenant des zones où des molécules 4 ont une orientation collective privilégiée, et des zones où des molécules 2 ont une orientation collective aléatoire. Cette configuration de mémoire comprenant trois couches est obtenue comme précédemment décrit par orientation collective dans une direction privilégiée de toutes les molécules des trois couches 6A, 6B, 6C, puis par désorientation sélective dans des micro-volumes par absorption à deux photons.

Les couches 6A, 6B, 6C comprennent donc différentes zones locales, une première partie de ces zones comprenant des molécules dans un premier état collectif de molécules correspondant à une orientation locale privilégiée dans les zones locales, et une deuxième partie de ces zones comprenant des molécules dans un deuxième état collectif de molécules correspondant à une orientation locale aléatoire dans les zones locales.

Les plans 6A, 6B et 6C sont typiquement séparés de quelques micromètres.

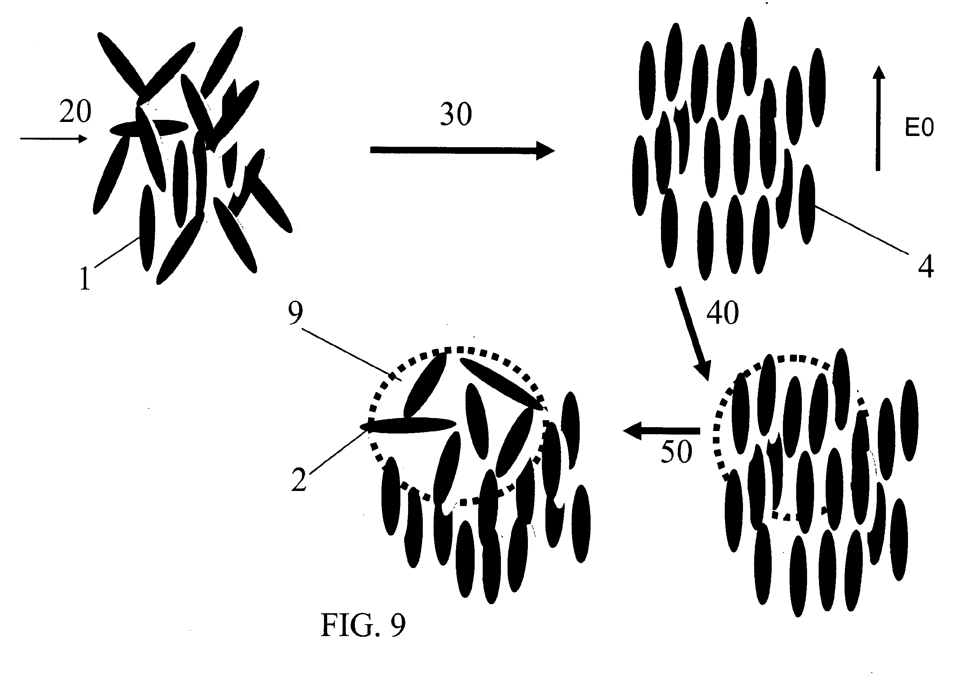

La FIG. 9 illustre l'effet sur des molécules à transfert de charge, du procédé d'écriture d'informations binaires selon l'invention.

Dans une étape 20, on fournit des molécules 1, de préférence à transfert de charge dans un matériau, par exemple réticulable ou polymérisable. Dans une étape 30, ces molécules sont orientées dans l'ensemble du matériau, par exemple sous l'effet d'un champ électrique E₀. Les molécules ainsi orientées sont notées 4. Les molécules sont ensuite fixées dans cet état, par exemple par rigidification du matériau. Dans une étape 40, un faisceau d'écriture est focalisé dans une zone d'écriture 9 par effet d'absorption à deux photons. Dans une étape 50, les molécules sont désorientées dans la zone d'écriture 9 de sorte à créer une zone dans laquelle des molécules 2 ont une orientation aléatoire.

On note que les moyens pour contrôler les positions du faisceau lumineux en fonction des bits « 0 » ou « 1 » à écrire sont connus de l'homme du métier. L'écriture d'un bit « 0 » nécessite dans ce cas l'application du faisceau localement, et l'écriture d'un bit « 1 » ne nécessite pas l'émission du faisceau. Le codage en 0 et 1 correspond donc sensiblement à une succession d'émission et de non émission du faisceau laser d'écriture.

Dans une étape de lecture, un faisceau de lecture sera transmis avec génération de second harmonique pour des molécules 4 dans une zone de lecture d'orientation privilégiée, et sans génération de second harmonique pour des molécules 2 dans une zone de lecture, d'orientation aléatoire.

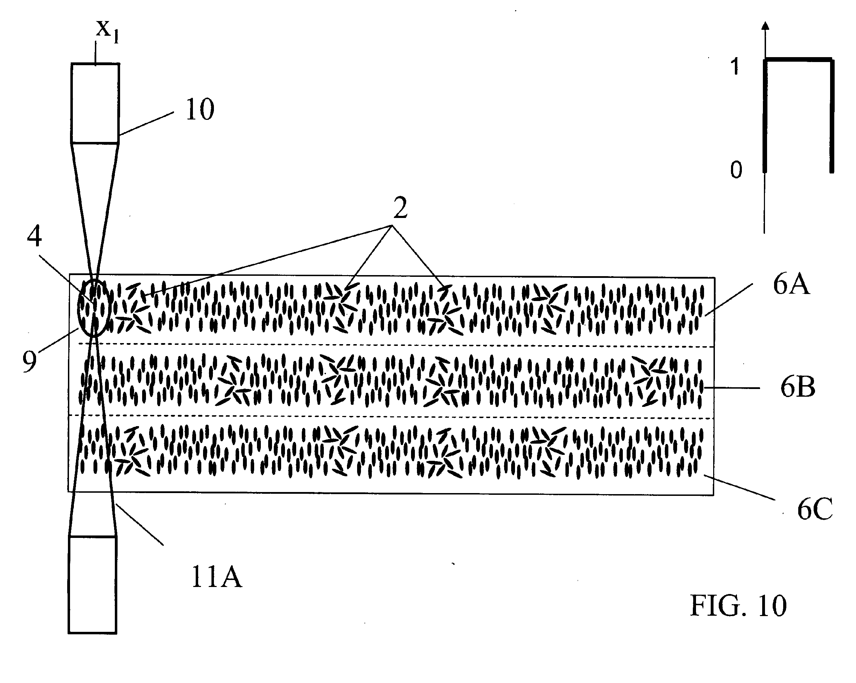

Les FIG. 10 à FIG. 14 illustre un procédé de lecture des informations inscrites sur le disque conformément au procédé d'écriture tel que précédemment décrit.

Sur cette FIG. 10, on a représenté une mémoire selon l'invention comprenant des zones dans lesquelles des molécules 4 ont une orientation privilégiée et des zones dans lesquelles des molécules 2 ont une orientation aléatoire. Ces molécules ont par exemple été orientées de façon générale et désorientées collectivement comme précédemment décrit.

Ces zones sont lues successivement par un faisceau laser incident 10 de longueur d'onde λ positionné selon une position x₁. On détecte alors le faisceau transmis par le passage du faisceau incident au niveau d'une zone de lecture 9. On note que la longueur d'onde λ du faisceau de lecture peut être égale à la longueur d'onde utilisée pour désorienter les molécules par absorption à deux photons, mais elle peut également être différente. Cette longueur d'onde λ est typiquement de l'ordre de 800 nm. Par ailleurs, le laser de lecture n'est pas nécessairement un laser pulsé.

Selon l'invention, on détecte les signaux de second harmonique éventuellement générés par les molécules 4 et 2. Comme précédemment décrit, le fait que des phénomènes de génération de second harmonique et d'absorption à deux photons soient tous deux des effets quadratiques permet à la zone d'écriture correspondant à des désorientations des molécules, d'être d'une taille de l'ordre de la zone de lecture. Cette taille réduite des zones de lecture et d'écriture est valable aussi dans un plan normal au faisceau incident 10, que dans la direction du faisceau incident 10, ce qui permet une lecture et une écriture sur plusieurs couches 6A, 6B, 6C proches. Le pas de lecture et le pas d'écriture sont donc d'un ordre de grandeur similaire, ce qui permet de fournir une mémoire inscriptible et lisible.

Illustré FIG. 10, les molécules 4 dans la zone de lecture 9 correspondant à la zone de focalisation du faisceau de lecture 10 sont orientées de façon privilégiée selon une direction. Un signal de second harmonique est donc généré par les molécules 4 dans la zone 9. Un faisceau transmis 11A de longueur d'onde λ/2 est donc détecté. La détection d'un tel signal correspond alors par exemple au codage d'un bit « 1 ». Ceci est illustré par exemple par le créneau valant 1 sur la FIG. 10. II est entendu que les moyens de détection du signal de second harmonique sont connus de l'homme du métier.

De la même façon, les moyens électroniques pour convertir la détection ou non d'un signal de second harmonique en une information binaire sont également connus de l'homme du métier.

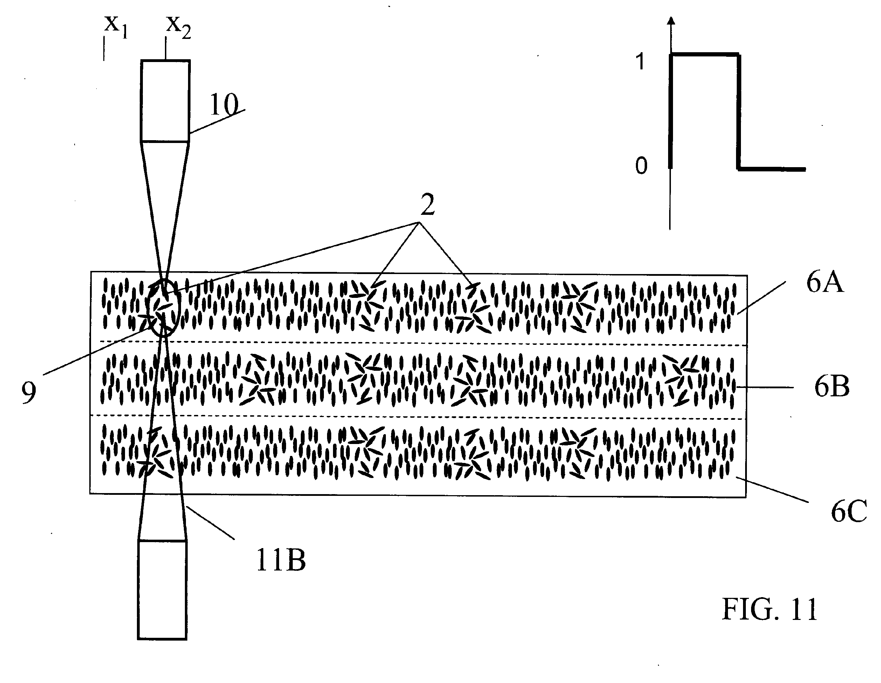

La FIG. 11 illustre un avancement du faisceau 10 de sorte à lire successivement l'ensemble des données des couches 6A, 6B, 6C. Entre les FIG. 10 et FIG. 11, le laser a donc été déplacé de la position x₁ à la position x₂. Le laser de lecture peut par exemple être déplacé dans un sens de lecture par des moyens mécaniques connus. La mémoire optique comprenant les couches 6A, 6B, 6C peut également être déplacée par rapport à un laser fixe par des moyens mécaniques connus.

Sur la FIG. 11, les molécules 2 dans la nouvelle zone de lecture 9 correspondant à la zone de focalisation du faisceau de lecture 10 sont orientées aléatoirement dans la nouvelle zone 9. Aucun signal de second harmonique n'est donc généré par les molécules 2 de cette zone 9. Le faisceau transmis 11B ne comprend donc aucune composante de longueur d'onde λ/2, ce qui correspond par exemple à un bit « 0 » , comme illustré par le créneau de la FIG. 11 à la valeur 0.

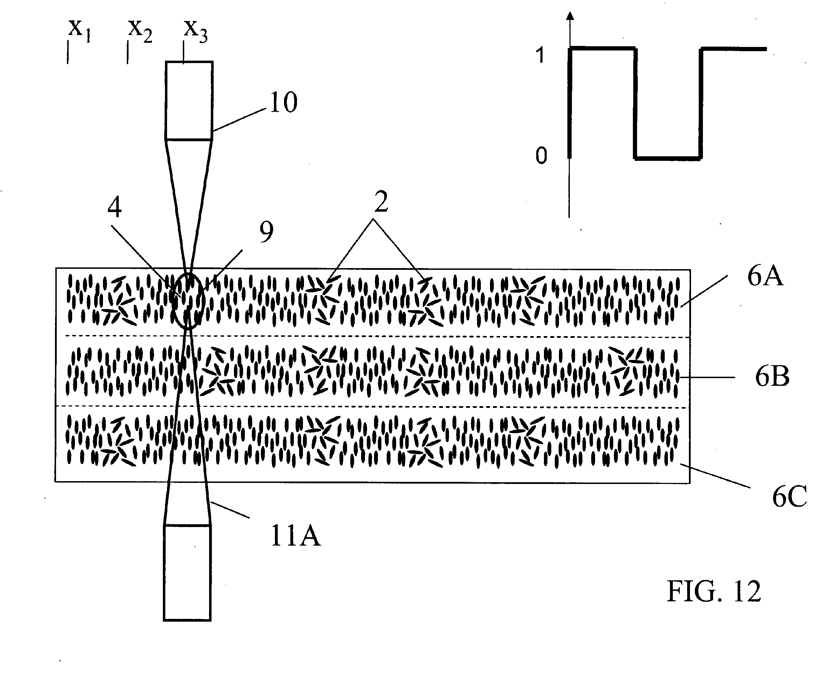

Illustré FIG.12, le faisceau lumineux de lecture 10 est décalé sur la mémoire vers une nouvelle zone de lecture 9 correspondant à une position x₃ du laser de lecture. Cette fois, les molécules 4 ont une orientation privilégiée dans la zone de lecture. Un signal de second harmonique est donc généré par les molécules 4 de cette zone 9. Un faisceau transmis 11A de longueur d'onde λ/2 est donc détecté, ce qui correspond par exemple à un bit « 1 », comme illustré par le créneau de la FIG. 12 à la valeur 0.

L'ensemble des couches 6A, 6B et 6C de la mémoire selon l'invention peuvent alors être lues comme précédemment décrit.

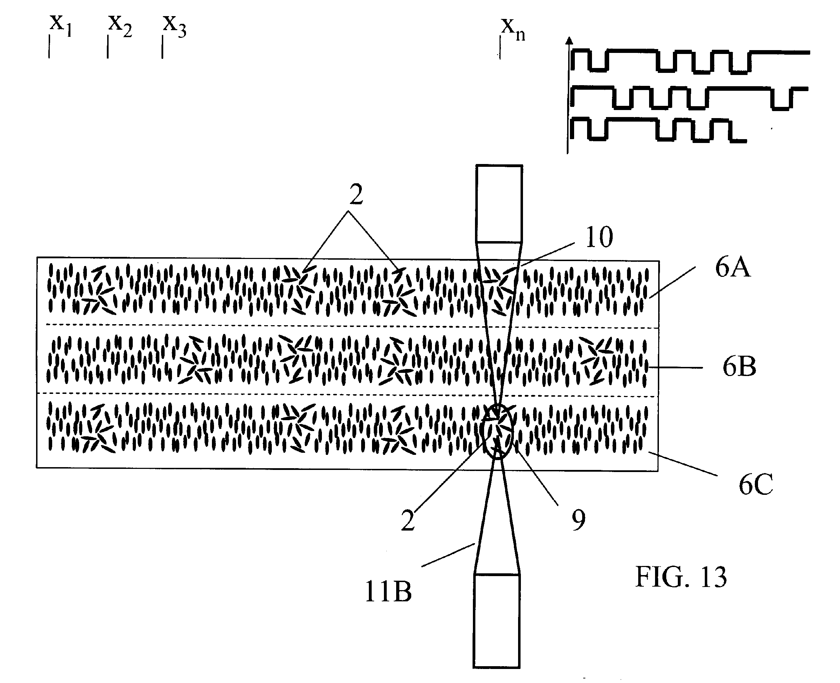

En particulier, illustré FIG. 13, le faisceau laser peut être focalisé sur une quelconque des couches du matériau comprenant des molécules. Le laser est positionné selon une position xₙ sur un axe, et une altitude zₙ. Sur la FIG. 13, le faisceau est focalisé sur la couche 6C vers une zone de lecture 9, dans laquelle les molécules 2 ont une orientation aléatoire. Comme précédemment, aucun signal de second harmonique n'est détecté dans le faisceau transmis 11B, et un bit « 0 » est donc lu, comme illustré par le créneau à la valeur 0 correspondant à la troisième couche.

La mémoire optique telle que précédemment décrite peut être organisée en un disque comprenant une ou plusieurs couches. On écrit alors sur les différentes couches comme il a été précédemment décrit. Le nombre de couches du disque n'est limité selon l'invention que par la nécessité de maintenir le faisceau d'écriture proche de la zone d'écriture. En particulier, pour une distance focale de l'objectif d'écriture de l'ordre de 500 micromètres, il est possible de fournir une mémoire ayant une centaine de couches de quelques micromètres d'épaisseur.

La mémoire optique ainsi obtenue permet donc une inscription en volume de bits de taille micrométrique.

On note que la mémoire optique précédemment décrite peut également être réinscriptible. En effet, en chauffant la mémoire à suffisamment haute température, les molécules orientées de façon privilégiées retrouvent une orientation aléatoire. L'application du procédé d'écriture selon l'invention comprenant des étapes successives d'orientation globale des molécules selon une direction privilégiée et de désorientation locale en fonction des données à écrire permet donc de réécrire dans une mémoire selon l'invention.

On a également pu constater que le désordre d'orientation à l'intérieur des molécules d'une zone est plus ou moins important selon l'intensité ou la puissance du rayonnement électromagnétique d'écriture appliquée sur ladite zone. Selon ce degré de désordre sur une zone donnée, l'intensité du signal de second harmonique en réponse à un même rayonnement de lecture appliqué sur cette zone varie.

Afin d'accroître les performances de stockage, il a été prévu d'utiliser chacune des zones d'écriture unitaires pour stocker des symboles binaires composés d'une chaîne binaire. La longueur de la chaîne binaire dépend du nombre de niveaux d'intensité de signal de second harmonique détectable par le système de lecture.

De façon similaire à ce qui a été présenté ci-dessus, l'intensité du laser pulsé femtoseconde est réglée en fonction de l'état collectif final souhaité et donc du symbole binaire à inscrire.

L'intensité correspond à l'énergie qui est effectivement appliquée à la zone considérée pour désordonner les molécules correspondantes.

Cette intensité variable peut être obtenue en modifiant la puissance du laser pulsé selon l'une des quatre puissances suivantes :
- état 1 : puissance = 0 mW pour le symbole « 11 »
- état 2 : puissance = 20 mW pour le symbole « 10 »
- état 3 : puissance = 50 mW pour le symbole « 01 »
- état 4 : puissance = 100 mW pour le symbole « 00 »

Il est entendu que des symboles binaires plus longs peuvent être mémorisés en utilisant un plus grand nombre de niveaux de puissances réglables.

Au lieu de modifier la puissance du faisceau laser appliqué, il est possible de varier le temps d'exposition d'un même faisceau pour modifier l'état d'une zone vers l'un quelconque des différents états.

Dans les zones écrites, les molécules présentent une désorganisation (orientations irrégulières des molécules) d'autant plus importante que l'énergie reçue sur la zone est importante.

Lors de la lecture par un même rayonnement électromagnétique de lecture, l'intensité du signal de second harmonique renvoyé par la zone écrite est d'autant plus importante que la désorganisation des molécules est faible. Les moyens électroniques comparent alors l'intensité détectée avec des intensités seuil définissant les réponses des quatre états de molécules. Les moyens électroniques génèrent alors le symbole binaire correspondant à l'état détecté.

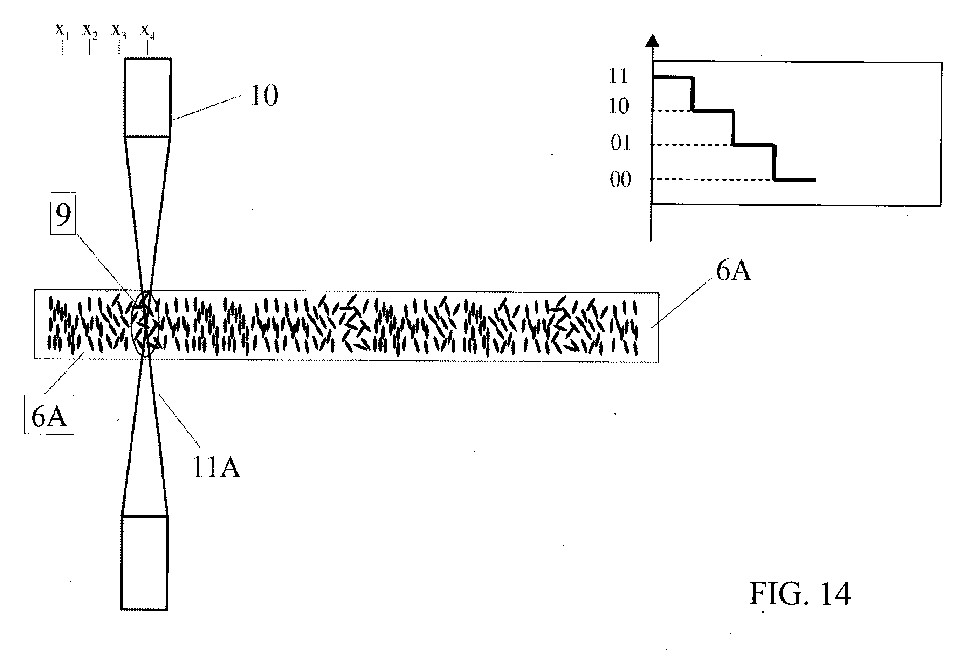

La FIG. 14 illustre la lecture d'une mémoire utilisant des niveaux de désordre des zones d'écriture/lecture. Le faisceau laser de lecture 10 est positionné successivement sur les positions x₁, x₂, x₃, ... de la couche 6A de mémoire. Comme indiqué précédemment, le faisceau transmis 11A est successivement analysé pour chacune de ces positions.

En position x₁, un signal de second harmonique est détecté dans le faisceau 11A du fait de l'orientation privilégiée des molécules de la zone correspondante, ce qui correspond à la détection d'un symbole binaire de type "00".

En position x₂, les molécules de la zone de focalisation correspondante sont légèrement désordonnées. Un signal de second harmonique légèrement atténué (détection grâce à des seuils) est alors détecté dans le faisceau transmis 11A, ce qui correspond à un signal binaire "10".

De même en position x₃ et x₄, un signal de second harmonique fortement atténué et inexistant sont successivement détectés, ce qui correspond, respectivement, à des symboles binaires "01" et "00".

## Revendications

1. Procédé d'écriture dans une mémoire de données comprenant au moins une couche (6A, 6B, 6C) d'un matériau support (8), ladite couche comprenant des molécules (2, 4) aptes à prendre un état collectif de molécules parmi au moins un premier état collectif de molécules (4), et un deuxième état collectif de molécules (2), ledit procédé comprenant des étapes successives :
- d'application (30) d'un champ électrique d'orientation (E₀) à ladite au moins une couche, ledit champ électrique d'orientation étant apte à mettre lesdites molécules dans ledit premier état collectif de molécules ;
- de fixation desdites molécules dans ledit premier état collectif de molécules ;
- d'application sélective (40, 50) d'un rayonnement électromagnétique d'écriture au niveau d'au moins une zone d'écriture (9) de ladite au moins une couche, ledit rayonnement électromagnétique d'écriture étant apte à générer une absorption à deux photons au niveau de ladite au moins une zone d'écriture, faisant passer lesdites molécules dudit premier état collectif de molécules (4) audit second état collectif de molécules dans ladite au moins une zone d'écriture (2) ;
les molécules des deux états collectifs de molécules différents étant aptes à générer, lorsqu'elles sont excitées par un rayonnement électromagnétique de lecture, des signaux de second harmonique d'intensité différente, **caractérisé en ce que** ledit rayonnement électromagnétique d'écriture est apte à générer une absorption à deux photons au niveau de ladite au moins une zone d'écriture et est appliqué sur chaque zone d'écriture avec une intensité et/ou une durée variables prédéterminées associées à une chaine binaire ayant au moins 3 états pour passer un nombre variable de molécules du premier état au second état de sorte que l'intensité des signaux de seconde harmoniques générés varie pour permettre la lecture de la chaine binaire.

2. Procédé selon la revendication 1, dans lequel lesdites molécules sont des molécules à transfert de charge orientables, les différents états collectifs de molécules ayant des degrés différents de désorientation collective des molécules.

3. Procédé selon la revendication 2, dans lequel ledit premier état collectif de molécules est une orientation privilégiée collective desdites molécules dans ledit matériau support, et ledit deuxième état de molécule est une orientation aléatoire collective desdites molécules, et dans lequel ledit champ électrique d'orientation (E₀) est apte à orienter lesdites molécules selon ladite orientation privilégiée.

4. Procédé selon l'une des revendications précédentes, dans lequel les molécules ayant ledit premier état collectif de molécules dans ladite zone d'écriture sont aptes à générer un signal de second harmonique d'intensité maximale lorsqu'elles sont excitées par un rayonnement électromagnétique de lecture et les molécules ayant ledit second état collectif sont aptes à générer un signal de second harmonique d'intensité nulle.

5. Procédé selon l'une des revendications 1 à 4, dans lequel ladite étape de fixation desdites molécules dans ledit premier état de molécule comprend une étape de polymérisation dudit matériau support.

6. Procédé selon l'une des revendication 1 à 5, dans lequel ladite étape d'application sélective d'un rayonnement électromagnétique d'écriture comprend des sous-étapes de :
- réception d'un signal binaire d'écriture ;
- application dudit rayonnement électromagnétique d'écriture au niveau d'au moins une zone d'écriture en fonction dudit signal binaire d'écriture.

7. Procédé selon la revendication 6, comprenant des étapes consistant à :
- recevoir un signal binaire d'écriture ayant une valeur parmi plusieurs valeurs de signal d'écriture ;
- régler des paramètres dudit rayonnement électromagnétique de sorte à définir une énergie à appliquer, en fonction de ladite valeur ;
- appliquer ledit rayonnement électromagnétique au niveau de ladite zone d'écriture.

8. Procédé selon la revendication 6 ou 7, comprenant des étapes consistant à :
- recevoir un signal binaire d'écriture ayant une première valeur de signal d'écriture ou une deuxième valeur de signal d'écriture ;
- appliquer ledit rayonnement électromagnétique uniquement lorsque ledit signal d'écriture a ladite première valeur de signal d'écriture.

9. Procédé selon l'une des revendications 1 à 8, comprenant en outre une étape préalable consistant à :
- chauffer ladite mémoire de sorte à mettre lesdites molécules dans ledit second état de molécules.

10. Procédé d'exploitation d'une mémoire optique de données comprenant l'écriture de ladite mémoire optique selon l'une quelconque des revendications 1 à 9, et au moins une étape ultérieure de lecture de ladite mémoire optique,
ladite étape de lecture comprenant des étapes de :
- focalisation d'un rayonnement électromagnétique de lecture sur une zone de lecture d'une couche de ladite mémoire optique ;
- détection de l'intensité d'un signal de second harmonique émis par des molécules dans ladite zone de lecture
- génération d'un signal de lecture représentatif de ladite intensité détectée.

11. Procédé selon la revendication 10, dans lequel ladite étape de génération d'un signal de lecture représentatif de ladite intensité détectée comprend des sous-étapes consistant à :
- générer une première valeur dudit signal de lecture en cas détection positive dudit signal de second harmonique ;
- générer une deuxième valeur dudit signal de lecture en cas détection négative dudit signal de second harmonique.

12. Dispositif d'écriture pour réaliser le procédé selon l'une quelconque des revendications 1 à 11 comprenant une mémoire de données à partir d'au moins une couche d'un matériau support, ledit matériau support comprenant des molécules aptes à prendre un état collectif de molécules parmi au moins un premier état collectif de molécules, et un deuxième état collectif de molécules, ledit dispositif comprenant en outre :
- des moyens d'orientation aptes à appliquer un champ électrique d'orientation (E₀) à ladite au moins une couche de sorte à mettre lesdites molécules dans ledit premier état collectif de molécules ;
- des moyens de fixation aptes à fixer lesdites molécules dans ledit premier état collectif de molécules;
- des moyens d'écriture aptes à appliquer sélectivement un rayonnement électromagnétique d'écriture au niveau d'au moins une zone d'écriture de ladite au moins une couche, ledit rayonnement électromagnétique d'écriture étant apte à générer une absorption à deux photons au niveau de ladite au moins une zone d'écriture, faisant passer lesdites molécules dudit premier état collectif de molécules audit second état collectif de molécules dans ladite une zone d'écriture ;
les molécules des deux états collectifs de molécules différents étant aptes à générer, lorsqu'elles sont excitées par un rayonnement électromagnétique de lecture, des signaux de second harmonique d'intensité différente, **caractérisé en ce que** ledit rayonnement électromagnétique d'écriture est apte à générer une absorption à deux photons au niveau de ladite au moins une zone d'écriture et est appliqué sur chaque zone d'écriture avec une intensité et/ou une durée variables prédéterminées associées à une chaine binaire ayant au moins 3 états pour passer un nombre variable de molécules du premier état au second état de sorte que l'intensité des signaux de seconde harmoniques générés varie pour permettre la lecture de la chaine binaire.

13. Dispositif selon la revendication 12, dans lequel lesdites molécules sont des molécules à transfert de charge orientables, les différents états collectifs de molécules ayant des degrés différents de désorientation collective des molécules.

14. Dispositif selon la revendication 13, dans lequel ledit premier état collectif de molécules est une orientation privilégiée collective desdites molécules dans ledit matériau support, et ledit deuxième état collectif de molécules est une orientation aléatoire collective desdites molécules dans ladite zone d'écriture, et dans lequel ledit champ électrique d'orientation (E₀) est apte à orienter lesdites molécules selon ladite orientation privilégiée collective.

15. Dispositif selon l'une des revendications 12 à 14, dans lequel les molécules ayant ledit premier état collectif de molécules sont aptes à générer un signal de second harmonique d'intensité maximale lorsqu'elles sont excitées par un rayonnement électromagnétique de lecture dans ladite zone d'écriture.

16. Dispositif selon l'une des revendications 12 à 15, comprenant en outre des moyens de paramétrage dudit rayonnement électromagnétique d'écriture de sorte à définir une énergie à appliquer, en fonction de l'état collectif final de la zone à écrire.

17. Dispositif selon l'une des revendications 12 à 16 dans lequel lesdits moyens de fixation comprennent des moyens de polymérisation apte à polymériser ledit matériau support.

18. Système de lecture/écriture d'une mémoire optique de données, comprenant un dispositif d'écriture selon l'une quelconque des revendications 12 à 17 et un dispositif de lecture de ladite mémoire de données,
ledit dispositif de lecture comprenant :
- des moyens de focalisation aptes à focaliser un rayonnement électromagnétique de lecture sur une zone de lecture d'une couche de ladite mémoire optique ;
- de moyens de détection apte à détecter une intensité d'un signal de second harmonique émis par des molécules dans ladite zone de lecture ;
- des moyens de génération apte à générer un signal de lecture représentatif de ladite intensité détectée.

## Claims

1. Method of writing in a data memory comprising at least one layer (6A, 6B, 6C) of a support material (8), the said layer comprising molecules (2, 4) able to take a collective state of molecules from among at least a first collective state of molecules (4), and a second collective state of molecules (2), the said method
comprising successive steps:
- of applying (30) an orientation electric field (E₀) to the said at least one layer, the said orientation electric field being able to place the said molecules in the said first collective state of molecules;
- of fixing the said molecules in the said first collective state of molecules;
- of selectively applying (40, 50) a writing electromagnetic radiation at the level of at least one writing zone (9) of the said at least one layer, the said writing electromagnetic radiation being able to generate a two-photon absorption at the level of the said at least one writing zone, causing the said molecules to pass from the said first collective state of molecules (4) to the said second collective state of molecules in the said at least one writing zone (2);
the molecules of the two different collective states of molecules being able to generate, when they are excited by a reading electromagnetic radiation, second-harmonic signals of different intensity, **characterized in that** the said writing electromagnetic radiation is able to generate a two-photon absorption at the level of the said at least one writing zone and is applied to each writing zone with a predetermined variable intensity and/or duration which are associated with a binary chain having at least 3 states so as to pass a variable number of molecules from the first state to the second state such that the intensity of the second-harmonic signals generated varies so as to allow the reading of the binary chain.

2. Method according to Claim 1, in which the said molecules are orientable charge-transfer molecules, the various collective states of molecules having different degrees of collective disorientation of the molecules.

3. Method according to Claim 2, in which the said first collective state of molecules is a collective favoured orientation of the said molecules in the said support material, and the said second molecule state is a collective random orientation of the said molecules, and in which the said orientation electric field (E₀) is able to orient the said molecules according to the said favoured orientation.

4. Method according to one of the preceding claims, in which the molecules having the said first collective state of molecules in the said writing zone are able to generate a second-harmonic signal of maximum intensity when they are excited by a reading electromagnetic radiation and the molecules having the said second collective state are able to generate a second-harmonic signal of zero intensity.

5. Method according to one of Claims 1 to 4, in which the said step of fixing the said molecules in the said first molecule state comprises a step of polymerizing the said support material.

6. Method according to one of Claims 1 to 5, in which the said step of selectively applying a writing electromagnetic radiation comprises sub-steps of:
- receiving a writing binary signal;
- applying the said writing electromagnetic radiation at the level of at least one writing zone as a function of the said writing binary signal.

7. Method according to Claim 6, comprising steps consisting in:
- receiving a writing binary signal having a value from among several values of writing signal;
- adjusting parameters of the said electromagnetic radiation so as to define an energy to be applied, as a function of the said value;
- applying the said electromagnetic radiation at the level of the said writing zone.

8. Method according to Claim 6 or 7, comprising steps consisting in:
- receiving a writing binary signal having a first value of writing signal or a second value of writing signal;
- applying the said electromagnetic radiation solely when the said writing signal has the said first value of writing signal.

9. Method according to one of Claims 1 to 8, furthermore comprising a prior step consisting in:
- heating the said memory so as to place the said molecules in the said second state of molecules.

10. Method for utilizing an optical data memory comprising the writing of the said optical memory according to any one of Claims 1 to 9, and at least one subsequent step of reading the said optical memory,
the said reading step comprising steps of:
- focusing a reading electromagnetic radiation on a reading zone of a layer of the said optical memory;
- detecting the intensity of a second-harmonic signal emitted by molecules in the said reading zone.
- generating a reading signal representative of the said detected intensity.

11. Method according to Claim 10, in which the said step of generating a reading signal representative of the said detected intensity comprises sub-steps consisting in:
- generating a first value of the said reading signal in the event of positive detection of the said second-harmonic signal;
- generating a second value of the said reading signal in the event of negative detection of the said second-harmonic signal.

12. Writing device for carrying out the method according to any one of Claims 1 to 11 comprising a data memory on the basis of at least one layer of a support material, the said support material comprising molecules able to take a collective state of molecules from among at least a first collective state of molecules, and a second collective state of molecules, the said device furthermore comprising:
- orientation means able to apply an orientation electric field (E₀) to the said at least one layer so as to place the said molecules in the said first collective state of molecules;
- fixing means able to fix the said molecules in the said first collective state of molecules;
- writing means able to selectively apply a writing electromagnetic radiation at the level of at least one writing zone of the said at least one layer, the said writing electromagnetic radiation being able to generate a two-photon absorption at the level of the said at least one writing zone, causing the said molecules to pass from the said first collective state of molecules to the said second collective state of molecules in the said one writing zone;
the molecules of the two different collective states of molecules being able to generate, when they are excited by a reading electromagnetic radiation, second-harmonic signals of different intensity, **characterized in that** the said writing electromagnetic radiation is able to generate a two-photon absorption at the level of the said at least one writing zone and is applied to each writing zone with a predetermined variable intensity and/or duration which are associated with a binary chain having at least 3 states so as to pass a variable number of molecules from the first state to the second state such that the intensity of the second-harmonic signals generated varies so as to allow the reading of the binary chain.

13. Device according to Claim 12, in which the said molecules are orientable charge-transfer molecules, the various collective states of molecules having different degrees of collective disorientation of the molecules.

14. Device according to Claim 13, in which the said first collective state of molecules is a collective favoured orientation of the said molecules in the said support material, and the said second collective state of molecules is a collective random orientation of the said molecules in the said writing zone, and in which the said orientation electric field (E₀) is able to orient the said molecules according to the said collective favoured orientation.

15. Device according to one of Claims 12 to 14, in which the molecules having the said first collective state of molecules are able to generate a second-harmonic signal of maximum intensity when they are excited by a reading electromagnetic radiation in the said writing zone.

16. Device according to one of Claims 12 to 15, furthermore comprising means for parametrizing the said writing electromagnetic radiation so as to define an energy to be applied, as a function of the final collective state of the zone to be written.

17. Device according to one of Claims 12 to 16 in which the said fixing means comprise polymerization means able to polymerize the said support material.

18. System for reading/writing an optical data memory, comprising a writing device according to any one of Claims 12 to 17 and a device for reading the said data memory,
the said reading device comprising:
- focusing means able to focus a reading electromagnetic radiation on a reading zone of a layer of the said optical memory;
- detection means able to detect an intensity of a second-harmonic signal emitted by molecules in the said reading zone;
- generating means able to generate a reading signal representative of the said detected intensity.

## Patentansprüche

1. Verfahren zum Schreiben in einen Datenspeicher, der mindestens eine Schicht (6A, 6B, 6C) eines Trägermaterials (8) enthält, wobei die Schicht Moleküle (2, 4) enthält, die einen kollektiven Zustand von Molekülen unter mindestens einem ersten kollektiven Zustand von Molekülen (4) und einem zweiten kollektiven Zustand von Molekülen (2) annehmen können, wobei das Verfahren aufeinanderfolgende Schritte enthält:
- des Anwendens (30) eines elektrischen Ausrichtungsfelds (E₀) an die mindestens eine Schicht, wobei das elektrische Ausrichtungsfeld die Moleküle in den ersten kollektiven Zustand von Molekülen versetzen kann;
- der Fixierung der Moleküle in dem ersten kollektiven Zustand von Molekülen;
- des selektiven Anwendens (40, 50) einer elektromagnetischen Schreibstrahlung im Bereich mindestens einer Schreibzone (9) der mindestens einen Schicht, wobei die elektromagnetische Schreibstrahlung eine Zweiphotonenabsorption im Bereich der mindestens einen Schreibzone erzeugen kann, die die Moleküle vom ersten kollektiven Zustand von Molekülen (4) zum zweiten kollektiven Zustand von Molekülen in der mindestens einen Schreibzone (2) übergehen lassen kann;
wobei die Moleküle der zwei unterschiedlichen kollektiven Zustände von Molekülen, wenn sie von einer elektromagnetischen Lesestrahlung angeregt werden, Signale der zweiten Harmonischen unterschiedlicher Intensität erzeugen können, **dadurch gekennzeichnet, dass** die elektromagnetische Schreibstrahlung eine Zweiphotonenabsorption im Bereich der mindestens einen Schreibzone erzeugen kann und an jede Schreibzone mit einer vorbestimmten variablen Intensität und/oder Dauer angelegt wird, die eine Binärkette zugeordnet sind, die mindestens 3 Zustände hat, um eine variable Anzahl von Molekülen vom ersten Zustand in den zweiten Zustand übergehen zu lassen, damit die Intensität der erzeugten Signale der zweiten Harmonischen variiert, um das Lesen der Binärkette zu erlauben.

2. Verfahren nach Anspruch 1, bei dem die Moleküle ausrichtbare Ladungstransfer-Moleküle sind, wobei die verschiedenen kollektiven Zustände von Molekülen unterschiedliche Grade der kollektiven Desorientation der Moleküle haben.

3. Verfahren nach Anspruch 2, bei dem der erste kollektive Molekülzustand eine kollektive privilegierte Ausrichtung der Moleküle im Trägermaterial ist, und der zweite Molekülzustand eine kollektive Zufallsausrichtung der Moleküle ist, und bei dem das elektrische Ausrichtungsfeld (E₀) die Moleküle gemäß der privilegierten Ausrichtung ausrichten kann.

4. Verfahren nach einem der vorhergehenden Ansprüche, bei dem die Moleküle, die den ersten kollektiven Zustand von Molekülen in der Schreibzone haben, ein Signal der zweiten Harmonischen einer maximalen Intensität erzeugen können, wenn sie durch eine elektromagnetische Lesestrahlung angeregt werden, und die Moleküle, die den zweiten kollektiven Zustand haben, ein Signal der zweiten Harmonischen einer Intensität Null erzeugen können.

5. Verfahren nach einem der Ansprüche 1 bis 4, bei dem der Schritt der Fixierung der Moleküle im ersten Molekülzustand einen Schritt der Polymerisierung des Trägermaterials enthält.

6. Verfahren nach einem der Ansprüche 1 bis 5, bei dem der Schritt des selektiven Anwendens einer elektromagnetischen Schreibstrahlung Teilschritte enthält:
- des Empfangs eines binären Schreibsignals;
- des Anwendens der elektromagnetischen Schreibstrahlung im Bereich mindestens einer Schreibzone abhängig von dem binären Schreibsignal.

7. Verfahren nach Anspruch 6, das Schritte enthält, die darin bestehen:
- ein binäres Schreibsignal zu empfangen, das einen Wert von mehreren Schreibsignalwerten hat;
- Parameter der elektromagnetischen Strahlung so zu regeln, dass abhängig von dem Wert eine anzuwendende Energie definiert wird;
- die elektromagnetische Strahlung im Bereich der Schreibzone anzuwenden.

8. Verfahren nach Anspruch 6 oder 7, das Schritte enthält, die darin bestehen:
- ein binäres Schreibsignal zu empfangen, das eine ersten Schreibsignalwert oder einen zweiten Schreibsignalwert hat;
- die elektromagnetische Strahlung nur anzuwenden, wenn das Schreibsignal den ersten Schreibsignalwert hat.

9. Verfahren nach einem der Ansprüche 1 bis 8, das außerdem einen vorhergehenden Schritt enthält, der darin besteht:
- den Speicher zu erwärmen, um die Moleküle in den zweiten Zustand von Molekülen zu versetzen.

10. Verfahren für den Betrieb eines optischen Datenspeichers, das das Beschreiben des optischen Speichers nach einem der Ansprüche 1 bis 9 und mindestens einen späteren Schritt des Lesens des optischen Speichers enthält,
wobei der Leseschritt Schritte enthält:
- der Fokussierung einer elektromagnetischen Lesestrahlung auf eine Lesezone einer Schicht des optischen Speichers;
- der Erfassung der Intensität eines Signals der zweiten Harmonischen, das von Molekülen in der Lesezone emittiert wird;
- der Erzeugung eines Lesesignals, das für die erfasste Intensität repräsentativ ist.

11. Verfahren nach Anspruch 10, bei dem der Schritt der Erzeugung eines für die erfasste Intensität repräsentativen Lesesignals Teilschritte enthält, die darin bestehen:
- einen ersten Wert des Lesesignals im Fall einer positiven Erfassung des Signals der zweiten Harmonischen zu erzeugen;
- einen zweiten Wert des Lesesignals im Fall einer negativen Erfassung des Signals der zweiten Harmonischen zu erzeugen.

12. Schreibvorrichtung, um das Verfahren nach einem der Ansprüche 1 bis 11 durchzuführen, die einen Datenspeicher ausgehend von mindestens einer Schicht eines Trägermaterials enthält, wobei das Trägermaterial Moleküle enthält, die einen kollektiven Zustand von Molekülen unter mindestens einem ersten kollektiven Zustand von Molekülen und einem zweiten kollektiven Zustand von Molekülen annehmen können, wobei die Vorrichtung außerdem enthält:
- Ausrichtungseinrichtungen, die ein elektrisches Ausrichtungsfeld (E₀) an die mindestens eine Schicht anwenden können, um die Moleküle in den ersten kollektiven Zustand von Molekülen zu versetzen;
- Fixierungseinrichtungen, die die Moleküle im ersten kollektiven Zustand von Molekülen fixieren können;
- Schreibeinrichtungen, die selektiv eine elektromagnetische Schreibstrahlung im Bereich mindestens einer Schreibzone der mindestens einen Schicht anwenden können, wobei die elektromagnetische Schreibstrahlung eine Zweiphotonenabsorption im Bereich der mindestens einen Schreibzone erzeugen kann, die die Moleküle vom ersten kollektiven Zustand von Molekülen in den zweiten kollektiven Zustand von Molekülen in der einen Schreibzone übergehen lassen kann;
wobei die Moleküle der zwei unterschiedlichen kollektiven Zustände von Molekülen, wenn sie von einer elektromagnetischen Lesestrahlung angeregt werden, Signale der zweiten Harmonischen einer unterschiedlichen Intensität erzeugen können, **dadurch gekennzeichnet, dass** die elektromagnetische Schreibstrahlung eine Zweiphotonenabsorption im Bereich der mindestens einen Schreibzone erzeugen kann und an jede Schreibzone mit einer variablen und vorbestimmten Intensität und/oder Dauer angelegt wird, die einer Binärkette mit mindestens 3 Zuständen zugeordnet sind, um eine variable Anzahl von Molekülen vom ersten Zustand in den zweiten Zustand übergehen zu lassen, damit die Intensität der erzeugten Signale der zweiten Harmonischen variiert, um das Lesen der Binärkette zu erlauben.

13. Vorrichtung nach Anspruch 12, bei der die Moleküle ausrichtbare Ladungstransfer-Moleküle sind, wobei die verschiedenen kollektiven Zustände von Molekülen unterschiedliche Grade der kollektiven Desorientierung der Moleküle haben.

14. Vorrichtung nach Anspruch 13, bei der der erste kollektive Zustand von Molekülen eine kollektive privilegierte Ausrichtung der Moleküle im Trägermaterial ist, und der zweite kollektive Zustand von Molekülen eine kollektive Zufallsausrichtung der Moleküle in der Schreibzone ist, und bei dem das elektrische Ausrichtungsfeld (E₀) die Moleküle gemäß der kollektiven privilegierten Ausrichtung ausrichten kann.

15. Vorrichtung nach einem der Ansprüche 12 bis 14, bei der die Moleküle, die den ersten kollektiven Zustand von Molekülen haben, ein Signal der zweiten Harmonischen einer maximalen Intensität erzeugen können, wenn sie durch eine elektromagnetische Lesestrahlung in der Schreibzone angeregt werden.

16. Vorrichtung nach einem der Ansprüche 12 bis 15, die außerdem Einrichtungen zur Parametrierung der elektromagnetischen Schreibstrahlung enthalten, um eine anzuwendende Energie abhängig vom kollektiven Endzustand der zu beschreibenden Zone zu definieren.

17. Vorrichtung nach einem der Ansprüche 12 bis 16, bei der die Fixierungseinrichtungen Polymerisierungseinrichtungen enthalten, die das Trägermaterial polymerisieren können.

18. Lese-/Schreibsystem eines optischen Datenspeichers, das eine Schreibvorrichtung nach einem der Ansprüche 12 bis 17 und eine Lesevorrichtung des Datenspeichers enthält,
wobei diese Lesevorrichtung enthält:
- Fokussierungseinrichtungen, die eine elektromagnetischen Lesestrahlung auf eine Lesezone einer Schicht des optischen Speichers fokussieren können;
- Erfassungseinrichtungen, die eine Intensität eines Signals der zweiten Harmonischen, das von Molekülen in der Lesezone emittiert wird, erfassen können;
- Erzeugungseinrichtungen, die ein Lesesignal erzeugen können, das für die erfasste Intensität repräsentativ ist.
